# EUROPÄISCHE PATENTANMELDUNG

(11) **EP 2 204 895 A1**
(43) Veröffentlichungstag der Anmeldung: **07.07.2010**
(21) Anmeldenummer: 09150006.6
(22) Anmeldetag: 02.01.2009
(51) Int. Cl.: H02K 7/116, H02K 7/08, B02C 18/24, B02C 13/30

(54) **Antriebseinheit für eine Zerkleinerungsmaschine und Zerkleinerungsmaschine**

(71) Anmelder: Siemens Aktiengesellschaft, 80333 München (DE)
(72) Erfinder: Schäufele, Stephan, 91052 Erlangen (DE)

(57) **Zusammenfassung**

Zerkleinerungsmaschinen ermöglichen das Zerkleinern von Schüttgut. Dazu wird in einem Zerkleinerungswerk einer Zerkleinerungsmaschine eine Welle mit Zerkleinerungswerkzeugen verwendet, die durch eine Antriebseinheit angetrieben wird. Es soll eine kompakte Antriebseinheit für eine Zerkleinerungsmaschine bereitgestellt werden, die kostengünstig und mit wenigen Montageschritten an verschiedene Typen von Zerkleinerungsmaschinen angepasst werden kann. Es wird dazu eine Antriebseinheit (10) mit einer elektrischen Maschine bereitgestellt, wobei die elektrische Maschine über ein Getriebe (16) mit einer Welle (22) eines Zerkleinerungswerks verbunden werden kann. Erfindungsgemäß ist ein Rotor (12) der elektrischen Maschine in dem Getriebe (16) gelagert. Zu der Erfindung gehört auch eine Zerkleinerungsmaschine mit einer erfindungsgemäßen Antriebseinheit. Die Antriebseinheit eignet sich für verschiedene Zerkleinerungsmaschinen, wie z.B. Granulatoren, Brecher oder Schneidmühlen.

## Beschreibung

Die Erfindung betrifft eine Antriebseinheit für eine Zerkleinerungsmaschine gemäß dem Oberbegriff von Patentanspruch 1. Die Erfindung betrifft auch eine Zerkleinerungsmaschine mit einer Antriebseinheit.

Zerkleinerungsmaschinen werden u.a. dazu eingesetzt, Abfälle zu zerstückeln, um sie leichter wiederverwerten zu können. Weitere Beispiele für Zerkleinerungsmaschinen sind Granulatoren, Brecher oder Schneidmühlen.

Das Zerkleinern wird von einer Zerkleinerungsmaschine durch ein Zerkleinerungswerk bewirkt. Darin ist eine Welle angeordnet, die beispielsweise mit Klingen bestückt ist. Indem die Welle mittels einer Antriebseinheit gedreht wird, schneiden diese Klingen das zu zerkleinernde Gut in Stücke. Anstelle von Klingen werden z.B. in Brechern als Zerkleinerungswerkzeuge Zähne eingesetzt, mit denen brüchige Materialien zermalmt oder gebrochen werden können.

Beim Zerkleinern wirkt ein Drehmoment auf die Welle, welches sich oft ruckartig und verhältnismäßig stark ändert. Ursache dafür können bei Abfällen harte Gegenstände sein, die eine Bewegung einer Klinge blockieren. Beim Brechen entsteht grundsätzlich eine stoßweise Belastung der Welle. Stoßartiges Belasten oder ruckartiges Blockieren der Welle bedeutet eine hohe mechanische Belastung für die Lagerung der Welle und für die Antriebseinheit der Zerkleinerungsmaschine.

Eine Antriebseinheit einer Zerkleinerungsmaschine ist deshalb immer an den jeweiligen Typ der zugehörigen Zerkleinerungsmaschine (Abfallzerkleinerung, Brechen etc.) angepasst. Dies betrifft vor allem das Drehmoment, das die Antriebseinheit auf die Welle des Zerkleinerungswerks überträgt, und die Drehzahl, mit der die Welle beim Zerkleinern rotiert. Bei Zerkleinerungsmaschinen, bei denen die Welle des Zerkleinerungswerks abwechselnd in entgegengesetzte Umlaufrichtungen rotieren muss (im reversierenden Betrieb), wird eine möglichst große Beschleunigung der Welle angestrebt, um eine schnelle Verarbeitung des zu zerkleinernden Guts zu ermöglichen.

In der Druckschrift DE 10 2005 037 668 B4 ist eine Zerkleinerungsvorrichtung mit Drehstrom-Synchronmotor und integrierter Umlaufgetriebestufe beschrieben. Die Antriebseinheit dieser Zerkleinerungsvorrichtung besteht aus einem hochpoligen Drehstrom-Synchronmotor (Torquemotor), dessen speziell ausgebildete Hohlwelle ein Getriebe umschließt. Der Motor sowie die Getriebeeinrichtung sind in einem gemeinsamen Gehäuse angeordnet.

Zerkleinerungsmaschinen sollen möglichst kostengünstig hergestellt werden. Dazu wird angestrebt, eine Zerkleinerungsmaschine eines bestimmten Typs aus Standardkomponenten herstellen zu können. Die Standardkomponenten sollen mit nur geringen baulichen Änderungen an den benötigten Typ von Zerkleinerungsmaschine angepasst werden können.

Die Antriebseinheiten von Zerkleinerungsmaschinen müssen zusätzlich sehr kompakt gebaut sein, um sie räumlich sehr nahe an der Welle des Zerkleinerungswerks unterbringen zu können.

Es ist daher Aufgabe der vorliegenden Erfindung, eine Antriebseinheit für eine Zerkleinerungsmaschine bereitzustellen, die kompakt gebaut ist und in verschiedenen Typen von Zerkleinerungsmaschinen verbaut werden kann. Des Weiteren soll eine Zerkleinerungsmaschine bereitgestellt werden, die unaufwendig für verschiedene Formen der Zerkleinerung angepasst werden kann.

Die Aufgabe wird mit einer Antriebseinheit gemäß Patentanspruch 1 gelöst. Zu der Erfindung gehört auch eine Zerkleinerungsmaschine gemäß Patentanspruch 13. Vorteilhafte Weiterbildungen der Erfindung sind in den Unteransprüchen beschrieben.

Erfindungsgemäß umfasst eine Antriebseinheit für eine Zerkleinerungsmaschine eine elektrische Maschine mit einem Rotor sowie ein Getriebe, wobei der Rotor in dem Getriebe gelagert ist.

Ein solche Antriebseinheit benötigt wenig Bauraum, d.h. sie ist sehr kompakt. Durch Anpassen des Getriebes kann sie außerdem leicht in verschiedenen Typen von Zerkleinerungsmaschinen verbaut werden. Schließlich neigt der Rotor bei stoßartiger Belastung weniger zum Schwingen: Indem ein Lager des Rotors räumlich sehr nahe an den Rädern des Getriebes angeordnet ist, kann die Welle des Rotors entsprechend kurz ausgestaltet sein. Sie ist dadurch mechanisch steif, d.h. sie federt nur geringfügig. Dies gilt insbesondere für Torsionskräfte, die auf die Welle wirken. Eine solche Welle wird als torsionssteif bezeichnet.

In vorteilhafter Weise weist das Getriebe ein Gehäuse auf, das einen Abschnitt des Rotors umgibt.

Indem ermöglicht wird, dass der Rotor in das Gehäuse des Getriebes hineinragt, lässt sich die Antriebseinheit noch kompakter bauen. Dabei ist das Getriebe allerdings nicht vollständig in die elektrische Maschine integriert. Indem das Getriebe ein gesondertes Gehäuse aufweist, können verschlissene Teile im Getriebe mit geringem Aufwand ausgewechselt werden: Die Räder und Lager des Getriebes sind nämlich leicht zugänglich, da einfach das Gehäuse des Getriebes geöffnet werden muss, um sie erreichen zu können. Ein solches (gesondertes) Gehäuse kann beispielsweise eine Stirnwand eines Stators der elektrischen Maschine bilden.

Weitere Vorteile ergeben sich, wenn ein Rad des Getriebes auf einer Welle des Rotors befestigt ist. Mit anderen Worten ist das antriebsseitige Rad des Getriebes direkt auf der Rotorwelle aufgebracht. Eine solche Antriebseinheit ist besonders kompakt. Des Weiteren gibt es keine Verbindungsstücke zwischen dem Rotor und dem antriebseitigem Rad, welche ein Schwingen des Rotors in der oben beschriebenen Weise verursachen könnten.

Dieselben Vorteile ergeben sich, wenn ein Hohlrad des Getriebes in einer Hohlwelle des Rotors befestigt ist. Hohlwellen werden insbesondere bei elektrischen Maschinen eingesetzt, deren Rotor einen großen Durchmesser aufweist.

Ein direktes Anbringen eines Rads eines Getriebes an die Rotorwelle ist insbesondere bei einer Weiterbildung der erfindungsgemäßen Antriebseinheit möglich, bei der das Getriebe ein Planetengetriebe ist.

Ein Planetengetriebe bringt dabei den zusätzlichen Vorteil, dass das Übersetzungsverhältnis besonders leicht angepasst werden kann. Dadurch lässt sich die erfindungsgemäße Antriebseinheit mit besonders wenig Aufwand an einen bestimmten Typ von Zerkleinerungsmaschine anpassen.

Bei einer weiteren vorteilhaften Ausgestaltung der erfindungsgemäßen Antriebseinheit ist ein Stator der elektrischen Maschine an dem Gehäuse angeflanscht.

Diese Art der Verbindung zwischen dem Stator und dem Gehäuse erlaubt es, den Stator an dem Gehäuse aufzuhängen, wenn das Gehäuse an einer Zerkleinerungsmaschine angebracht ist. Dadurch kann darauf verzichtet werden, den Stator separat auf einem Fundament zu lagern. Wenn der Stator nicht fest mit einem Fundament verbunden ist, kann er zusammen mit dem Getriebe einer Kraft durch eine (translatorische) Bewegung in Wirkrichtung der Kraft ausweichen. Dies ist beispielsweise bei einer stoßartigen Belastung der Antriebseinheit nötig. Der Rotor rüttelt dabei an seinen Lagern, so dass eine entsprechende Kraft auf den Stator übertragen wird. Indem der Stator den rüttelnden Bewegungen des Rotors folgt, vermindert dies einen Verschleiß der Lager des Rotors.

Dabei ergibt sich ein weiterer Vorteil durch eine Stütze zum Unterbinden einer rotatorischen Bewegung des Stators der elektrischen Maschine um eine Rotationsachse des Rotors, wobei die Stütze eine translatorische Bewegung des Stators ermöglicht.

Eine solche Stütze wird auch als Momentenstütze oder Drehmomentstütze bezeichnet. Durch sie kann ein Drehmoment, das vom Rotor auf den Stator zurückwirkt, beispielsweise auf ein Fundament abgeleitet werden. Mit der Drehmomentstütze ist es somit möglich, die Antriebseinheit an einer Zerkleinerungsmaschine anzuhängen und dennoch mit der Antriebseinheit eine Welle in der Zerkleinerungsmaschine anzutreiben. Eine Ausweichbewegung des Stators, wie sie oben beschrieben ist, ist dabei weiterhin möglich.

Eine andere Weiterbildung der erfindungsgemäßen Antriebseinheit stellt eine Einrichtung zum Erfassen eines Drehwinkels des Rotors um seine Rotationsachse bereit.

Eine solche Einrichtung wird auch Winkellagegeber oder Resolver genannt. Sie ermöglicht es, beispielsweise Servomotoren als elektrische Maschine der Antriebseinheit zu bereitzustellen. Elektrische Maschinen dieser Art können ein verhältnismäßig hohes Drehmoment insbesondere bei einer niedrigen Drehzahl des Rotors erzeugen. Dies ist bei Zerkleinerungsmaschinen oft erwünscht.

Die Einrichtung zum Erfassen eines Drehwinkels ist dabei in vorteilhafter Weise dazu ausgebildet, einen Wert auszuwerten, der von einem durch die elektrische Maschine fließenden Strom abgeleitet ist.

Die Winkellage des Rotors lässt sich beispielsweise anhand der Stromstärke durch Wicklungen der elektrischen Maschine ermitteln. Diese Form des Erfassens des Drehwinkels hat den Vorteil, dass sie verschleißfrei ist. Die Bestimmbarkeit des Drehwinkels wird durch einen ausreichend großen Unterschied zwischen einer Längsreluktanz (Reluktanz: magnetischer Widerstand) des Rotors und einer quer dazu bestimmten Querreluktanz ermöglicht.

Eine in diesem Zusammenhang vorteilhafte Bauform der elektrischen Maschine ergibt sich, wenn der Rotor Permanentmagnete aufweist, die derart angeordnet sind, dass sich ein zwischen zwei Polen des Stators gemessener magnetischer Widerstand des Rotors in Abhängigkeit von dem Drehwinkel des Rotors ändert.

Dies kann beispielsweise bei einem Synchronmotor dadurch erreicht werden, dass einige Permanentmagnete des Rotors des Synchronmotors durch Eisen, d.h. magnetisch gut leitendes Material, ersetzt werden.

Eine alternative, ebenfalls vorteilhafte Weiterbildung des Rotors ergibt sich, wenn der Rotor Bleche aufweist, die derart geformt sind, dass sich ein zwischen zwei Polen des Stators gemessener magnetischer Widerstand des Rotors in Abhängigkeit von dem Drehwinkel des Rotors ändert.

Bei Zerkleinerungsmaschinen ist es besonders vorteilhaft, wenn die elektrische Maschine der Antriebseinheit ein Torquemotor ist. Unter einem Torquemotor ist ein Servomotor zu verstehen, der dazu ausgebildet ist, ein hohes Drehmoment bei einer niedrigen Drehzahl zu erzeugen. Dies bildet einen vorteilhaften Antrieb für eine Welle eines Zerkleinerungswerks einer Zerkleinerungsmaschine.

Zu der Erfindung gehört auch eine Zerkleinerungsmaschine mit einer erfindungsgemäßen Antriebseinheit. Eine solche Zerkleinerungsmaschine lässt sich mit geringem Arbeitsaufwand und kostengünstig für unterschiedliche Formen der Zerkleinerung und für unterschiedliches Zerkleinerungsgut anpassen.

Bei einer Weiterbildung der erfindungsgemäßen Zerkleinerungsmaschine ist ein Rad oder eine Aufnahmeeinheit des Getriebes an einer Welle eines Zerkleinerungswerks, insbesondere an einer mit Zerkleinerungswerkzeugen bestückte Welle, befestigt. Mit anderen Worten: Die Welle des Zerkleinerungswerks ist direkt von der Antriebseinheit angetrieben, es findet keine Umleitung des abtriebsseitig vom Getriebe abgegriffenen Moments über weitere Wellen statt. Dies macht den Antriebsstrang, der aus der elektrischen Maschine, dem Getriebe und der Welle des Zerkleinerungswerks besteht, besonders torsionssteif.

Des Weiteren wird es möglich, die Antriebseinheit so mit der Welle des Zerkleinerungswerks zu verbinden, dass die Welle des Zerkleinerungswerks die Antriebseinheit (bzw. einen wesentlichen Teil derselben) trägt. Eine solche reitende Lagerung der Antriebseinheit bewirkt, dass die Antriebseinheit nicht separat auf einem Fundament gelagert werden muss. Daraus ergibt sich der oben genannte Vorteil: Die Antriebseinheit kann durch eine ausweichende Bewegung quer zur Rotationsachse der Welle einer Kraft nachgeben, die von der Welle auf die Antriebeinheit übertragen wird. Dies schont die Lager der Welle des Zerkleinerungswerks erheblich.

Die Erfindung wird im Folgenden anhand von Ausführungsbeispielen näher erläutert. Dazu zeigen
- FIG 1: eine Ausführungsform einer erfindungsgemäßen Antriebs- einheit und eine damit verbundene Welle eines Zerklei- nerungswerks,
- FIG 2: eine Ausführungsform einer erfindungsgemäßen Antriebs- einheit mit einer Einrichtung zum Erfassen eines Dreh- winkels eines Rotors.

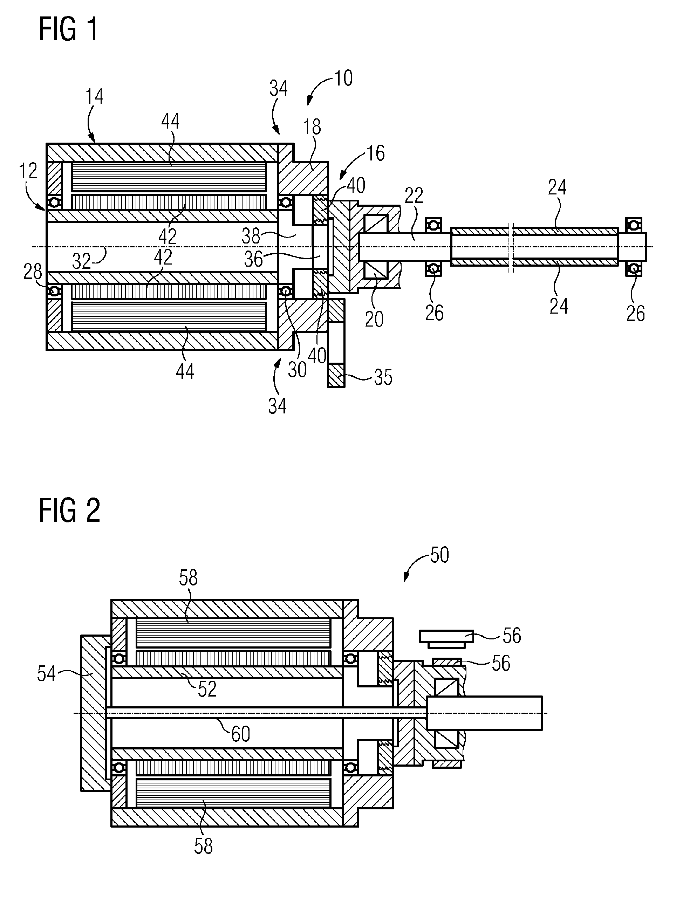

In FIG 1 ist eine Antriebseinheit 10 dargestellt. Die Antriebseinheit umfasst eine elektrische Maschine mit einem Rotor 12 und einem Stator 14. Des Weiteren umfasst die Antriebseinheit 10 ein Planetengetriebe 16 mit einem Gehäuse 18. Ein Sonnenrad 36 des Planetengetriebes 16 ist direkt auf einer Welle 38 des Rotors 12 befestigt. Eine Spannvorrichtung 20 des Planetengetriebes 16 wird über die Planetenräder 40 angetrieben.

Das Getriebe 16 ist über die Spannvorrichtung 20 mit einer Welle 22 eines in FIG 1 nicht weiter dargestellten Zerkleinerungswerks einer Zerkleinerungsmaschine verbunden. Die Welle 22 des Zerkleinerungswerks ist mit Klingen 24 bestückt. Die Welle 22 ist mittels zweier Kugellager 26 gelagert. Auch der Rotor 12 der elektrischen Maschine ist über zwei Lager 28, 30 in der Antriebseinheit 10 gelagert. Dabei ist ein Lager 30 in dem Getriebe 16 angeordnet. Dadurch ist die Abmessung der Antriebseinheit 10 entlang einer Rotationsachse 32 des Rotors geringer als bei einer vergleichbaren Antriebseinheit aus dem Stand der Technik.

Der Stator 14 der elektrischen Maschine ist mittels eines Flansches 34 an das Gehäuse 18 des Planetengetriebes 16 angeflanscht. Das Getriebe 16 bildet damit eine Stirnwand des Stators 14. Über den Flansch 34 wird das Gewicht des Stators 14 vom Gehäuse 18 des Getriebes 16 getragen.

Die Einheit aus Stator 14 und Gehäuse 18 ist über eine Drehmomentstütze 35 mit einem in FIG 1 nicht gezeigten Fundament verbunden, auf dem die Zerkleinerungsmaschine steht. Die Drehmomentstütze 35 unterbindet eine rotatorische Bewegung der Einheit aus Stator 14 und Gehäuse 18 um die Rotationsachse 32. Eine translatorische Bewegung der Antriebseinheit 10 quer zur Rotationsachse 32 wird dagegen nicht durch die Drehmomentstütze 35 blockiert. Dadurch ist es möglich, dass die Antriebseinheit 10 einer Bewegung der Welle 22 folgen kann, wenn sich die Welle 22 kurzzeitig verbiegt. Dies ist beispielsweise der Fall, wenn eine der Klingen 24 auf einen harten Gegenstand im Zerkleinerungswerk stößt, so dass die Welle 22 und damit der Rotor 12 ruckartig zum Stillstand kommen.

Die elektrische Maschine der Antriebseinheit 10 ist ein Torquemotor, dessen Rotor 12 mit Permanentmagneten 42 bestückt ist. Der Stator 14 weist Pole 44 mit zugehörigen Polwicklungen auf. Ein durch die Polwicklungen der Pole 44 fließender Strom wird von einem in FIG 1 nicht dargestellten Umrichtersystem geregelt. Dazu wird ein Drehwinkel des Rotors 12 um seine Rotationsachse 32 erfasst. Dies geschieht durch Messen der Reluktanz des Rotors 12 bezüglich zweier Pole 44 des Stators 14. Die dazu verwendete Messeinheit ist in FIG 1 nicht dargestellt. Die gemessene Reluktanz ist vom Drehwinkel des Rotors 12 abhängig, weil die Permanentmagnete 42 des Rotors 12 an verschiedenen Stellen entlang des Umfangs des Rotors 12 Lücken aufweisen, in die Eisenplatten eingelegt sind.

In einer anderen Ausführungsform einer erfindungsgemäßen Antriebseinheit sind Permanentmagnete dagegen gleichmäßig und dicht auf dem Rotor angeordnet. Zum Erzeugen einer drehwinkelabhängigen Reluktanz sind stattdessen Aussparungen in Bleche des Rotors gestanzt. Unterhalb von Permanentmagneten sind die Bleche so gestanzt, dass sich beim Zusammenlegen der Bleche zu Blechpaketen Stege und Senken unterhalb der Permanentmagnete ausbilden, die den Fluss gut bzw. schlecht leiten und so für eine Reluktanz des Motors sorgen, die bezüglich der Pole des Stators von der Drehlage des Rotors abhängt.

Die in FIG 2 gezeigte Ausführungsform einer erfindungsgemäßen Antriebseinheit ist im Aufbau der mit dem Aufbau der in FIG 1 gezeigten Antriebseinheit 10 vergleichbar. Daher werden entsprechende Komponenten der Antriebseinheit 50 nicht noch einmal erläutert.

Im Unterschied zu der in FIG 1 dargestellten Antriebseinheit weist die Antriebseinheit 50 zwei Drehlagegeber 54, 56 auf, mit denen der Drehwinkel genauer bestimmt werden kann, als es auf Grundlage einer Messung einer Reluktanz möglich ist. Durch Verwenden der Drehlagegeber 54, 56 ist ein genaueres Steuern eines Stroms durch Polwicklungen von Polen 58 einer elektrischen Maschine der Antriebseinheit 50 möglich. Der Rotor 52 kann dadurch stärker beschleunigt werden, was für eine Antriebseinheit im reversierenden Betrieb vorteilhaft ist.

Der erste Drehlagegeber 54 weist eine in FIG 2 nicht weiter dargestellte Scheibe auf, die von einer im Rotor 52 angeordneten Welle 60 bei einer Drehung des Rotors 52 mitgedreht wird. Der Drehlagegeber 54 ist ein Bestandteil der elektrischen Maschine, der mit der elektrischen Maschine mitgeliefert wird. Allerdings ist seine Position am Ende des Rotors 52 und am Ende der Welle 60 ungünstig: Eine Rüttel- und Stoßbeanspruchung der elektrischen Maschine lenkt den Rotor 52 und die Welle 60 in Bezug auf ihre Lage zum Stator ruckartig aus, so dass auch die Scheibe des Drehlagegebers 54 mit ausgelenkt wird. Dadurch wird der Drehlagegeber 54 mechanisch stark beansprucht und somit bei häufiger Rüttel- und Stoßbeanspruchung schnell verschlissen. Um die elektrische Maschine wartungsärmer und zuverlässiger zu machen, ist ein externer zweiter Drehlagegeber 56 an eine günstigeren Position an der Maschine installiert. Der externe Drehlagegeber 56 ist nahe an einem in FIG 2 nicht gezeigten Kugellager einer Welle angeordnet. Durch das Kugellager wird die Welle daran gehindert, sich bei einem Stoß zu verbiegen und damit auch die beweglichen Komponenten des externen Drehlagegebers 56 auszulenken. Die günstige Lage des Drehlagegebers 56 nahe an einem Kugellager trägt dazu bei, dass der Drehlagegeber 56 verschleißarm und ausfallsicher betreibbar ist.

Um den Drehwinkel zu bestimmen, wird bei dem Drehlagegeber 56 außerdem eine andere Methode verwendet als bei dem Drehlagegeber 54. Je nach Typ der Zerkleinerungsmaschine, in die die Antriebseinheit 50 eingebaut werden soll, wird als externer Drehlagegeber 56 ein entsprechend geeignetes Modell verwendet, das eine Drehlage beispielsweise über induktive oder kapazitive Elemente erfasst. Bei solchen Drehlagegebern müssen nur wenige Komponenten an rotierenden Teilen befestigt werden, wodurch der Verschleiß des Drehlagegebers 56 ebenfalls geringer ist als beim Drehlagegeber 54.

Mit dem Drehlagegeber 56 wird die Drehlage des Rotors 52 elektronisch erfasst und an ein in FIG 2 nicht dargestelltes Umrichtersystem übertragen. In Abhängigkeit von der Drehlage des Rotors 52 wird der Strom durch die Polwicklungen der Pole 58 gesteuert.

Die dargestellten Beispiele machen deutlich, wie eine Antriebseinheit für eine Zerkleinerungsmaschine bereitgestellt werden kann, die kompakt gebaut ist und in verschiedenen Typen von Zerkleinerungsmaschinen verbaut werden kann.

## Patentansprüche

1. Antriebseinheit (10,50) für eine Zerkleinerungsmaschine umfassend
- eine elektrische Maschine mit einem Rotor (12,52)und
- ein Getriebe (16),
**dadurch gekennzeichnet, dass** der Rotor (12,52) in dem Getriebe (16) gelagert ist.

2. Antriebseinheit (10,50) nach Anspruch 1,
bei der das Getriebe (16) ein Gehäuse (18) aufweist,
**dadurch gekennzeichnet, dass** das Gehäuse (18) einen Abschnitt des Rotors (12,52) umgibt.

3. Antriebseinheit (10,50) nach Anspruch 1 oder 2,
**dadurch gekennzeichnet, dass** ein Rad (36) des Getriebes (16) auf einer Welle (38) des Rotors (12) befestigt ist.

4. Antriebseinheit (10,50) nach Anspruch 1 oder 2,
**dadurch gekennzeichnet, dass** ein Hohlrad des Getriebes in einer Hohlwelle des Rotors befestigt ist.

5. Antriebseinheit (10,50) nach einem der Ansprüche 3 oder 4, **dadurch gekennzeichnet, dass** das Getriebe (16) ein Planetengetriebe ist.

6. Antriebseinheit (10,50) nach einem der Ansprüche 2 bis 5 **dadurch gekennzeichnet, dass** ein Stator (14) der elektrischen Maschine an dem Gehäuse (18) angeflanscht ist.

7. Antriebseinheit (10,50) nach einem der vorhergehenden Ansprüche, **gekennzeichnet durch** eine Stütze (35)zum Unterbinden einer rotatorischen Bewegung des Stators der elektrischen Maschine um eine Rotationsachse des Rotors, wobei die Stütze (35)eine translatorische Bewegung des Stators ermöglicht.

8. Antriebseinheit (10,50) nach einem der vorhergehenden Ansprüche, **gekennzeichnet durch** eine Einrichtung zum Erfassen eines Drehwinkels des Rotors um seine Rotationsachse.

9. Antriebseinheit (10,50) nach Anspruch 8,
**dadurch gekennzeichnet, dass** die Einrichtung zum Erfassen eines Drehwinkels dazu ausgebildet ist, einen Wert auszuwerten, der von einem durch die elektrische Maschine fließenden Strom abgeleitet ist.

10. Antriebseinheit (10) nach Anspruch 8 oder 9,
**dadurch gekennzeichnet, dass** der Rotor (12) Permanentmagnete (42) aufweist, wobei die Permanentmagnete (42) derart angeordnet sind, dass sich ein zwischen zwei Polen (44) des Stators gemessener magnetischer Widerstand des Rotors (12) in Abhängigkeit von dem Drehwinkel des Rotors (12) ändert.

11. Antriebseinheit (10) nach Anspruch 8 oder 9,
**dadurch gekennzeichnet, dass** der Rotor (12) Bleche aufweist, wobei die Bleche derart geformt sind, dass sich ein zwischen zwei Polen (44) des Stators (14) gemessener magnetischer Widerstand des Rotors (12) in Abhängigkeit von dem Drehwinkel des Rotors (12) ändert.

12. Antriebseinheit (10,50) nach einem der vorhergehenden Ansprüche, **dadurch gekennzeichnet, dass** die elektrische Maschine ein Torquemotor ist.

13. Zerkleinerungsmaschine mit einer Antriebseinheit (10,50) nach einem der vorhergehenden Ansprüche.

14. Zerkleinerungsmaschine nach Anspruch 13
**dadurch gekennzeichnet, dass** ein Rad oder eine Aufnahmeeinheit (20) des Getriebes (16) an einer Welle (22) eines Zerkleinerungswerks, insbesondere eine mit Zerkleinerungswerkzeugen (24) bestückte Welle (22), befestigt ist.

15. Zerkleinerungsmaschine nach einem der Ansprüche 13 oder 14, **dadurch gekennzeichnet, dass** die Welle (22) des Zerkleinerungswerks die Antriebseinheit (10) trägt.
